# EUROPEAN PATENT SPECIFICATION

(11) **EP 0 332 442 B1**
(45) Date of publication and mention of the grant of the patent: **10.02.1993**
(21) Application number: 89302348.1
(22) Date of filing: 09.03.1989
(51) Int. Cl.: F16B 21/18, F16B 41/00

(54) **Locking fastener**
Gesicherte Verbindungsvorrichtung
Dispositif de fixation verrouille

(30) Priority: 11.03.1988 GB 8805829
(43) Date of publication of application: 13.09.1989
(73) Proprietor: EATON CORPORATION, Cleveland Ohio 44114 (US)
(72) Inventor: Coueron, Jacques Raymond, F-44600 Saint Nazaire (FR)
(74) Representative: Douglas, John Andrew

(56) References cited:
- US-A- 3 040 595
- US-A- 4 174 008
- US-A- 4 279 175
- US-A- 4 728 132

## Description

The present invention relates to locking a threaded fastener, eg a screw or bolt, to inhibit its becoming totally unthreaded by accident (for instance through vibration or insufficient tightening which cannot be sensed). Such unthreading can not only lose the fastener but also cause it catastrophically to fall into meshing gears, machinery or high-voltage electrics etc. A classical fastener lock comprises sticky or viscous or setting substances in the threads, which have only a limited time of effectivity, and/or wire passed through a hole in the fastener or friction devices in the threading, but their arrangement and assembly is time-consuming although reliable.

The invention aims at relatively simplified locking, without losing reliability when the fastener locates two objects in a direction transverse to the axis of the threading. In general, a tapered end of the fastener, having passed with clearance through a threaded portion of a first one of the objects, will progressively engage the second object with a taper to taper contact, eg conical end to conical blind hole or depression, thereby giving a precise desired transverse relationship when an intermediate threaded portion of the fastener engages said threaded portion of the first object.

Thus the invention will feature an assembly in accordance with the preamble of claim 1. Such fasteners are well known.

The assembly comprises a fastener having an annular region of reduced cross-section, such as a waist (19) between the end portion and the portion, such as is known from US-A-4 174 008 which (especially see Fig.5) represents the state of the art, and also US-A-4 728 132.

These references do not disclose threaded fasteners, or capturing the fastener in the same operation as securing the two objects together; or any scheme short of general destruction, for separating the two objects.

The tapered portion and the reduced region will cooperate with a radially expansible spring or resilient member, eg the well-known "Circlip" as follows. The clip should slide over the reduced cross-section and over part only of the taper without substantial expansion. The wider part of the taper must only be forcible through the clip by expanding it.

The two objects of the assembly must present an internal volume, e.g. by cooperating bores, recesses or apertures in which the clip is easily accommodated. The objects must be held together by other means, eg the second object is a sliding fit inside the first, as presently preferred. The invention, which is represented by Claim 1, enables removal of the fastener, sometimes enabling it to be used again; after having secured the two objects together, with a limited relative freedom if desired, in the same threading operation as rendering the fastener captive.

Further inventive objects and features will appear from the following description of the drawings, in which:-
Figure 1 shows a transmission shift yoke, a shift bar, a spring clip and a fastener embodiment in exploded perspective;
Figures 2-6 show in side section stages in tightening and accidental loosening of the fastener in engagement with the other components seen in Figure 1.

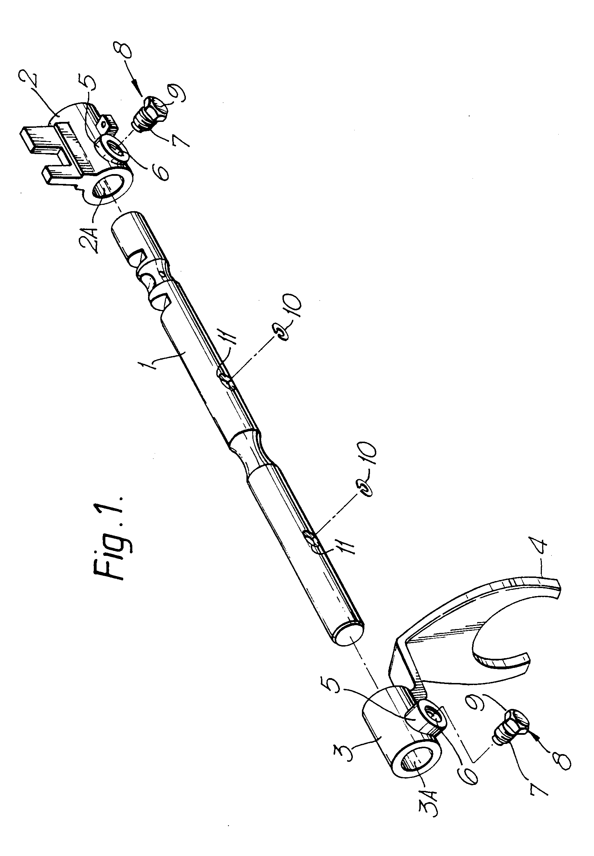

Referring to Figure 1, a rigid shift bar 1 must communicate both axial and rotational displacements between a shift block 2 as a driving member and a shift yoke 3 as a driven member. Shift block 2 may receive input motions from a manual lever or gear stick not shown, and shift yoke 3, driven to move similarly has to cause selector fork 4 to first engage and then move gears not shown. Both movements are small and critical, so block 2 and yoke 3 must both be attached to bar 1 with negligible play or uncertainty, whether axial or rotational, in relative positioning.

The driving and driven members can be interchanged, in that yoke 3 could drive the block, if required.

Accordingly the bar is a good slidable fit within respective apertures 2A and 3A in the driven and driving members (it must be slivable for assembly, dismantling for service and so on), yet the bar 1 must not slide or twist relative to the block or the yoke after assembly.

Moreover, the screws must not fall out even if they do work loose, since not only their loss and the relative unrestricted sliding of bar, block and yoke, but also damaged machinery could result. Moreover the screws, if they do work loose, should only be allowed a small freedom of unscrewing movement because only a correspondingly small freedom of relative sliding may be just about acceptable.

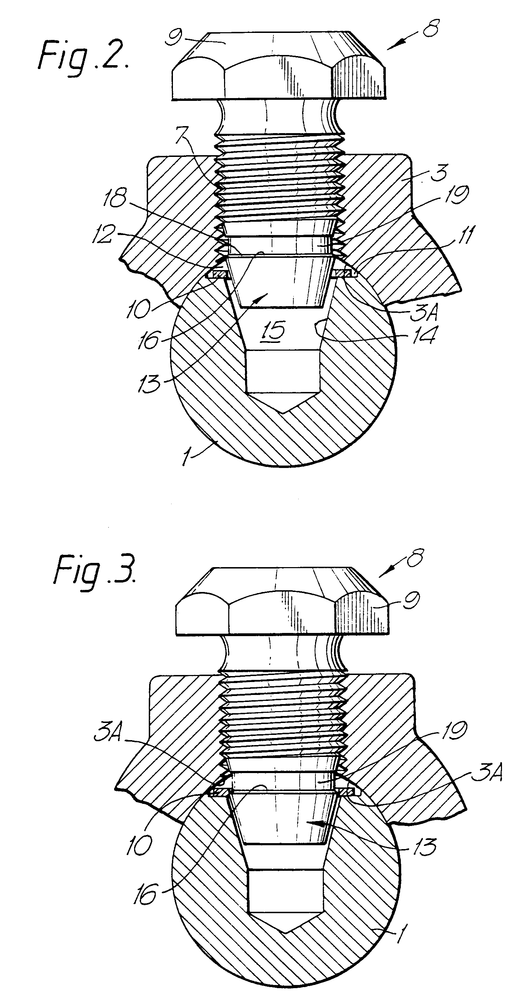

Embodying the invention, block 2 and yoke 3 have bosses 5 with threaded holes 6 to fit cooperating threaded shanks 7 on fasteners 8 having usual bolt heads 9 for spanners/wrenches. The fasteners have a tapered end and an intermediate groove for cooperating with snap rings 10. Also the shift bar has a spot face diameter 11, being a shallow disc-shaped recess or depression, to house the snap ring 10 and a tapered blind hole to accept a conical end of the fastener. Further details will become more apparent from Figures 2-6, which shows yoke 3 and its aperture 3A but not block 2, which is identical as far as sliding and locating on the shift bar are concerned. Therefore the screwing in of threaded shank 7 simultaneously renders the bolt captive and secures first and second objects together, with no transverse play between them.

It should be emphasized that the invention is not restricted to vehicle ratio shifters or to a second object slidably closely fitting in a first object, such as bar 1 in block 2 or yoke 3, but Figures 2 to 6 also concern this very suitable application.

Referring briefly again to Figure 1, each snap ring 10 is fitted in a circular spotface 11 before the first object (yoke 3 or block 2) is slid over it on the second object (bar 1). It may be slid thereover first, if the spotface is elongated or a milled flat, ring 10 being slid into position afterwards.
Referring now to Figure 2, spotface 11 forms, in cooperation with the aperture 2A or 3A, an annular housing 12 in which expansible spring clip 10 is shown an easy fit axially and exteriorly just before being resiliently expanded by the conical end 13 of the fastener 8. Figure 2 shows the fastener thread 7 engaged in yoke 3 (which is only shown in part) but not fully screwed home, ie the tapered end 13 is not yet in contact with the tapered sides 14 of the conical blind hole 15 in second object 3. Up to this point, turning can be effortless, by hand. A sufficiently tapered down end 13 is essential because it acts as a guide for locating the screw to the spring, and to the hole in the shaft.

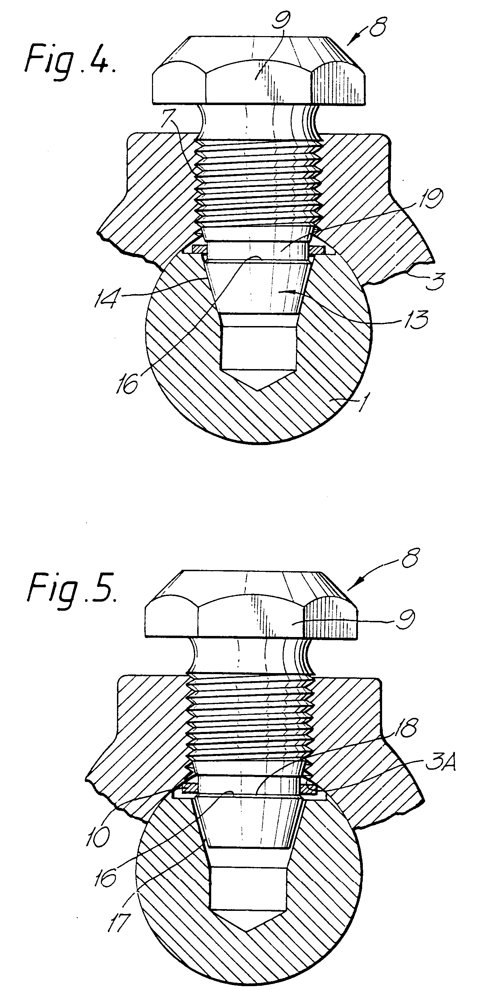

Further turning of bolthead 9 will encounter resistance, because the cone first contacts, then expands spring clip 10 into housing 12 from the condition in Figure 2 to that in Figure 3 when the widest part 16 of conical end 13 has expanded clip 10 as much as needed. Clip 10 may permit that this turning can be by hand. The clip 10 is now released by shoulder 16 and permitted to snap back into an annular waist or groove 19 in fastener 8, as shown in Figure 4, when the mating tapered surfaces 13 and 14 have engaged with each other, and this snapped-back condition can be sensed. Now fastener 8 can be screwed, if desired, firmly home by spanner/wrench or torque gun. There is now no transverse play between shaft 1 and yoke 3 or block 2 and their transverse relative location is precise, with precise torquing of head 9.

Preferably, thread 7 had received setting, hardening or viscous filler such as that sold under the trade mark "Loctite" inserted in the threaded hole 6, or applied directly to thread 7, before assembly. Otherwise the screw may back-off a small amount (eg between one half and one whole turn) due to vibration etc, before the widest part 16 abuts and locks against the now contracted spring washer 10 as shown in Figure 5.
There is now a small but acceptable maximum amount of transverse relative freedom between the first and second objects, as evidenced by the separation 17 depicted between the mating tapered surfaces.

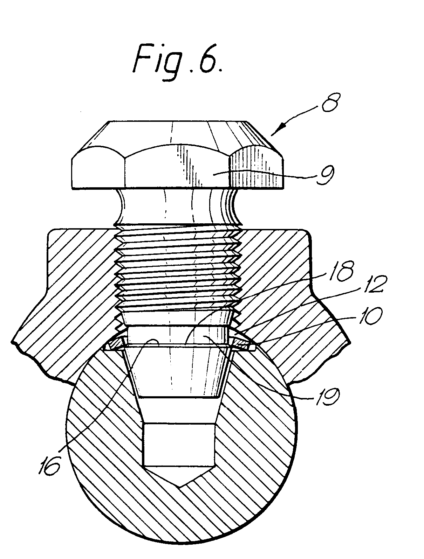

Even major vibrations will fail to unloosen the screw any further, so it cannot get dislodged and fall into gears etc, unless enough effort is applied to abut and distort spring clip 10 with the steep ramp 18 at the widest part 16 of the taper, as shown in Figures 5 and 6.
The recess 12 may be designed, in cooperation with apertures 2A and 3A of the driving and driven members, to allow either sufficient inner space and outer restriction for the spring clip 10 to dish as shown, or space to expand radially, unless it will be never required to remove fastener 8, eg for servicing or replacements. Once the widest part 16 of the taper 13 has passed clip 10, the latter will be dislodged from the groove 19, and minimal or hand torque will unscrew the fastener (just enough to break any residual "loctite" seal).

Of course the clip may be dished enough to need replacement, or perhaps be resilient enough to use again when assembled reverse side down. The advantage of wiring the fastener head is thus preserved, in that only one turn or less of freedom to unscrew is permitted.

Thus the combination of intermediate groove 19, recess 8, and spring clip 10 when assembled as described above,
a) permits only minimal uncertainty in transverse and rotatory position, in the case of objects which need to be transversely located eg by known tapering as described above but do not need to be pressed together; if desired, a finite minimal uncertainty or play can even be built in;
   and
b) reliably prevents potentially dangerous loosening or unfastening in robust operation, without giving the complications in assembly of the manufacturer having to drill and wire all the fastener heads.

The spring or resiliently expansible washer 10 should be dimensioned in combination with fastener 8, such that the tapered end 13 can enter washer 10 partially without expanding it, then end 13 can expand it, then after passage of widest part 16, the washer 10 can relax back to an unexpanded or less expanded state.

The bar 1 has a hole 15 able to receive the tapered end 13, and an annular volume 12 recessed therein, whereby in cooperation with the yoke or block to receive the spring washer even in its expanded state. The other body 3, yoke or block 2 has a threaded aperture 6 into its axial bore 2A or 3A through which the shank 7 of threaded fastener 8 can be screwed. The bores and recess cooperate to allow the washer to expand into volume 12, but not to permit the widest part 16 or ramp 18 of the fastener to be withdrawn without dishing the washer and/or expanding it radially.

## Claims

1. An assembly of first and second objects and a locking fastener (8) and a co-operative apertured circular resilient or spring member (10), the fastener comprising in axial order, a projection portion (9), by which it may be inserted, e.g. manually to an engagement position, a threaded shank portion (7), a tapered down portion (13) narrowing towards a distal end which can enter the circular member (10); wherein a waist region (19), of reduced cross-section which can be accommodated within the aperture of the circular member (10) is arranged axially intermediate the tapered portion (13) and the shank portion (7); wherein the waist region (19) is joined through a shoulder (18) to the proximal, larger end (16) of the tapered portion (13), which larger end can only enter the aperture of the circular member (10) after initial entry of the distal end and subsequent expansion of said aperture, and, in which the objects cooperate with the fastener for their securing together by means of the threading, characterized in that threading of the shank portion (7) renders the fastener captive, and the shoulder (18) is so ramped that the circular member (10) can be removed, but only after expansion and/or dishing thereof by virtue of the passage of the ramped shoulder (18) therethrough consequent on an unscrewing of the shank portion (7) from the retained second object (1), which first object (2 or 3) and second object (1) are assembled by passing the second object, which is elongated, through a bore (2A,3A) in the first object, and leave a volume (12) between them of restricted dimension such as to accommodate the circular spring member (10), but to cooperate with the ramped shoulder (18) to cause dishing of the spring member on said unscrewing of the shank portion and said passage of the shoulder; and wherein
the first object (2 or 3) is fixed rotationally and axially in relation to a locating station on the second, elongated object (1) over which the first object can slide longitudinally, said station being defined by a conical receiving hole (15) and an annular recess (11) surrounding the mouth of this hole, after said first object (2 or 3) has received said second object (1) in its bore (2A or 3A); and wherein
said bore has a formation cooperative with said recess to form said restricted volume (12), said first object also having a threaded insertion hole (6) radially of its bore (2A or 3A).

2. A locking fastener assembly according to Claim 1 characterized in that, when the fastener shank (7) is screwed sufficiently into the threaded insertion hole (6) of the second object (1), with the tapered fastener portion received by said conical hole (15), said recess (11) lies generally surrounding the waist region (19) of the fastener (8).

3. A locking fastener assembly according to Claim 2 characterized in that the bore (2A or 3A) of the first object cooperates with the recess (11) of the second object and the waist region (19) of the fastener to allow accommodation of the circular spring member (10) once this has been slid over the tapered portion onto the waist region (19) of the fastener, but to resist removal of the circular member (10), except by virtue of its distortion and/or expansion by said unscrewing of the shank portion and passage of the ramped shoulder, such removal of the member (10) being resisted once the fastener has been received in the conical hole (15) apart from, if desired, an initial axial play.

4. A locking fastener assembly according to any of Claims 1-3 characterized in that the projection portion (9) is a bolt-type head engageable by a spanner/wrench or torque gun or other keyed tool.

5. A locking fastener assembly according to any preceding Claim characterized in that there are two fasteners and circular spring members, and two said first objects which are pivoted in operation, namely a driving member (2) and a driven member (3), and two axially spaced such locating stations on a common said second object (1), whereby the second object (1) plays the role of driving link in torsion between the two said pivoting first objects (2,3).

6. A locking fastener assembly according to Claim 5 characterized in that the fasteners include respective captive bolts (8,8) to link pivoting movements of a gear shift lever and its attached gearbox/transmission shift block (2) via a rotatable shift bar (1) to a shift yoke (3) and so, to produce corresponding pivoting movements in the latter.

## Patentansprüche

1. Anordnung aus einem ersten sowie einem zweiten Teil, einem gesicherten Befestigungsmittel (8) und einem zusammenwirkenden, mit einer Öffnung versehenen, ringförmigen, nachgiebigen oder Federglied (10), wobei das Befestigungsmittel in axialer Reihenfolge einen vorstehenden Abschnitt (9), mittels dem er eingesetzt werden kann, bspw. manuell in eine Eingriffsstellung, einen mit einem Gewinde versehenen Schaftabschnitt (7), einen abgeschrägten Abschnitt (13), der sich in Richtung auf das distale Ende, das in das ringförmige Glied (10) eindringen kann, verjüngt, wobei ein eingeschnürter Bereich (19) mit vermindertem Querschnitt,der in der Öffnung des ringförmigen Gliedes (10) aufgenommen werden kann, in axialer Richtung zwischen dem abgeschrägten Abschnitt (13) und dem Schaftabschnitt (7) angeordnet ist; wobei der eingeschnürte bereich (19) sich über eine Schulter (18) an das proximale größere Ende (16) des abgeschrägten Abschnitts (13) anschließt, das nur nach einem anfänglichen Eindringen des distalen Endes und der nachfolgenden Aufweitung der Öffnung in die Öffnung des ringförmigen Gliedes eindringen kann, und wobei die Teile mit der Befestigungsmittel zusammenwirken, um durch das Gewinde aneinander gesichert zu werden, dadurch gekennzeichnet, daß das Gewinde auf dem Schaftabschnitt (7) dafür sorgt, daß das Befestigungsmittel festgehalten wird,daß die Schulter (18) derart abgeschrägt ist, daß das ringförmige Glied (10) entfernt werden kann, jedoch nur nach seiner Aufweitung und/oder Durchwölbung infolge des Durchgangs der abgeschrägten Schulter (18) als Folge eines Herausschraubens des Schaftabschnitts (7) aus dem gesicherten zweiten Teil (1), wobei das erste Teil (2 oder 3) und das zweite Teil (1) zusammengesetzt sind, indem das längliche zweite Teil durch eine Bohrung (2A, 3A) in dem ersten Teil hindurchgesteckt ist und ein Raum (12) mit begrenzter Abmessung zwischen ihnen verbleibt, um das ringförmige Federglied (10) aufzunehmen, jedoch um mit der abgeschrägten Schulter (18) zusammenzuwirken, damit ein Durchwölben des Federgliedes beim Herausschrauben des Schaftabschnittes und dem Durchgang der Schulter zustandekommt; daß das erste Teil (2 oder 3), nachdem das erste Teil (2 oder 3) das zweite Teil (1) in seiner Bohrung (2A oder 3A) aufgenommen hat und auf dem das erste Teil in Längsrichtung gleiten kann, bezüglich eines Befestigungsortes auf dem zweiten länglichen Teil (1) drehfest und axial gesichert ist, wobei der Ort durch eine konische Aufnahmeöffnung (15) und eine ringförmige Ausnehmung (11), die die Mündung der Öffnung umgibt, festgelegt; und daß
die Bohrung eine Gestalt hat, die mit der Ausnehmung zusammenwirkt, um den begrenzten Raum (12) zu bilden, wobei das erste Teil außerdem eine mit einem Gewinde versehene Einführungsöffnung (6) aufweist, die radial zu seiner Bohrung (2A oder 3A) verläuft.

2. Gesicherte Verbindungsanordnung nach Anspruch 1, dadurch gekennzeichnet, daß wenn der Schaft (7) des Befestigungsmittels ausreichend in die mit einem Gewinde versehene Einsatzbohrung (6) des zweiten Teils (1) eingedreht ist, wobei der abgeschrägte Abschnitt der Befestigungseinrichtung von der konischen Bohrung (15) aufgenommen ist, die Ausnehmung (11) im wesentlichen derart liegt, daß sie den eingeschnürten Abschnitt (19) der Verbindungseinrichtung (8) umgibt.

3. Gesicherte Verbindungsanordnung nach Anspruch 2, dadurch gekennzeichnet, daß die Bohrung (2A oder 3A) des ersten Teils mit der Ausnehmung (11) des zweiten Teils und dem eingeschnürten Abschnitt (19) des Befestigungsmittels zusammenwirkt, um die Unterbringung des ringförmigen Federgliedes (10) zu ermöglichen, sobald dies über den abgeschrägten Abschnitt in den eingeschnürten Abschnitt (19) des Befestigungsmittels geglitten ist, jedoch einer Entfernung des ringförmigen Gliedes (10) entgegenwirkt, es sei denn, dieses ringförmige Glied (10) wird beim Herausschrauben des Schaftabschnittes und dem Durchgang der abgeschrägten Schulter zerstört und/oder ausgedehnt, wobei, abgesehen von einem eventuell gewünschten anfänglichen axialen Spiel, der Entfernung des ringförmigen Gliedes (10) Widerstand entgegengesetzt wird, sobald einmal das Befestigungsmittel in der konischen Bohrung (15) aufgenommen wurde.

4. Gesicherte Verbindungsanordnung nach einem der Ansprüche 1 bis 3, dadurch gekennzeichnet, daß der vorstehende beschnitt (9) ein Schraubenkopf ist, der mit einem Schraubenschlüssel oder Drehmomentschlüssel oder einem anderen profilverzahnten Werkzeug zu erfassen ist.

5. Gesicherte Verbindungsanordnung nach einem der vorhergehenden Ansprüche, dadurch gekennzeichnet, daß zwei Befestigungsmittel und ringförmige Federglieder und zwei erste Teile, die beim betrieb geschwenkt werden, nämlich ein Antriebsglied (2) und ein angetriebenes Glied (3), und zwei dementsprechend axial beabstandete Befestigungsorte auf einem gemeinsamen zweiten Teil vorgesehen sind, wobei das zweite Teil (1) die Funktion einer drehmomentübertragenden Antriebsverbindung zwischen den beiden schwenkbaren ersten Teilen (2,3) hat.

6. Gesicherte Verbindungsanordnung nach Anspruch 5, dadurch gekennzeichnet, daß die Befestigungseinrichtungen entsprechende festgehaltene bolzen (8, 8) aufweisen, um Schwenkbewegungen eines Gangschalthebels und dessen zugeordneten Getriebegehäuse/ Getriebeschaltblocks mittels einer drehbaren Schaltstange (1) auf eine Schaltgabel (3) oder dergleichen zu übertragen, um in letzteren entsprechende Schwenkbewegungen zu erzeugen.

## Revendications

1. Assemblage d'un premier et d'un second objets et d'une attache de verrouillage (8) et d'un élément souple ou élastique circulaire (10) ouvert et coopérant, l'attache comportant, dans l'ordre axial, une portion (9) en projection au moyen de laquelle elle peut être insérée, par exemple manuellement, pour prendre une position où elle vient en prise, une portion filetée formant tige (7), une portion (13) en cône vers le bas, qui va en s'amincissant en direction de l'extrémité avant et peut pénétrer dans l'élément circulaire (10); attache dans laquelle une région formant étranglement (19), de section droite réduite et pouvant se loger dans l'ouverture de l'élément circulaire (10), est prévue, dans le sens axial, entre la portion conique (13) et la portion formant tige (7); dans laquelle la région formant étranglement (19) est réunie, par l'intermédiaire d'un épaulement (18), à l'extrémité arrière, plus large, (16), de la portion conique (13), laquelle extrémité arrière ne peut pénétrer dans l'ouverture de l'élément circulaire (10) qu'après l'entrée initiale de l'extrémité avant et l'expansion, qui en résulte, de ladite ouverture, et assemblage dans lequel les objets coopèrent avec l'attache pour que leur fixation se fasse ensemble par vissage, assemblage caractérisé en ce que le fait de visser la portion formant tige (7) rend l'attache prisonnière, et en ce que l'épaulement (8) présente une pente telle que l'élément circulaire (10) peut être enlevé, mais seulement après qu'il a été expansé et/ou qu'il a pris une forme bombée par suite du passage, à travers lui, de l'épaulement en pente (18) comme conséquence du dévissage de la portion formant tige (7) d'avec le second objet retenu (1), lequel premier objet (2 ou 3) et lequel second objet (1) sont assemblés du fait du passage du second objet, qui est de forme allongée, à travers un alésage (2A, 3A) prévu dans le premier objet, tout en laissant entre eux un volume (12) de dimension limitée de façon à y loger l'élément élastique circulaire (10), mais de façon aussi à coopérer avec l'épaulement en pente (18) pour donner à l'élément élastique une forme bombée lors dudit dévissage de la portion formant tige et dudit passage de l'épaulement; et assemblage dans lequel
le premier objet (2 ou 3) est fixé, en rotation et axialement, par rapport à une station de positionnement prévue sur le second objet, de forme allongée (1) sur lequel le premier objet peut coulisser longitudinalement, ladite station étant définie par un trou de réception conique (15) et par un creux annulaire (11) entourant l'embouchure de ce trou, après que ledit premier objet (2 ou 3) a reçu ledit second objet (1) dans son alésage (2A ou 3A); et assemblage dans lequel
ledit alésage a une forme prévue pour coopérer avec ledit creux pour former ledit volume limité (12), ledit premier objet présentant également un trou d'insertion fileté (6) dans le sens radial de son alésage (2A ou 3A).

2. Assemblage à attache de verrouillage selon la revendication 1, caractérisé en ce que, lorsque la tige (7) de l'attache est suffisamment vissée dans le trou d'insertion fileté (6) du second objet (1), la portion conique de l'attache étant reçue dans ledit trou conique (15), ledit creux (11) se situe de façon générale de façon à entourer la région d'étranglement (19) de l'attache (8).

3. Assemblage à attache de verrouillage selon la revendication 2, caractérisé en ce que l'alésage (2A ou 3A) du premier objet coopère avec le creux (11) du second objet et avec la région d'étranglement (19) de l'attache pour permettre le logement de l'élément élastique circulaire (10) une fois que celui-ci a glissé le long de la portion conique pour venir dans la région d'étranglement (19) de l'attache, mais pour résister à l'enlèvement de cet élément circulaire (10), sauf en le déformant et/ou en l'expansant lors dudit dévissage de la portion formant tige et du passage de l'épaulement en pente, un tel enlèvement de l'élément (10) rencontrant une opposition, à l'exception d'un jeu axial initial si on le désire, dès lors que l'attache s'est logée dans le trou conique (15).

4. Assemblage à attache de verrouillage selon l'une quelconque des revendications 1-3, caractérisé en ce que la portion en projection (9) est une tête du genre tête de vis sur laquelle on peut agir au moyen d'une clé ou d'un pistolet à couple ou d'un autre outil pour clé.

5. Assemblage à attache de verrouillage selon l'une quelconque des revendications précédentes caractérisé en ce qu'il y a deux attaches et deux éléments élastiques circulaires et deux dits premiers objets qui pivotent en fonctionnement, à savoir un élément menant (2) et un élément mené (3) et deux stations de positionnement, axialement espacées, sur ledit second objet (1), qui est commun, ce par quoi le second objet (1) joue le rôle de liaison rotative en torsion entre les deux dits premiers objets pivotants (2, 3).

6. Assemblage à attache de verrouillage selon la revendication 5 caractérisé en ce que les attaches comprennent des vis prisonnières respectives (8, 8) pour transmettre à un baladeur le changement de vitesse (3), par l'intermédiaire d'une tringle rotative de changement de vitesse (1), les mouvements de pivotement d'un levier du changement de vitesse et de son bloc (2) de changement de vitesse d'un réducteur/d'une boîte de vitesses, pour obtenir les mouvements de pivotement correspondants du baladeur de changement de vitesse.
